# EUROPEAN PATENT APPLICATION

(11) **EP 4 656 557 A1**
(43) Date of publication of application: **03.12.2025**
(21) Application number: 24178781.1
(22) Date of filing: 29.05.2024
(51) Int. Cl.: B65G 1/04

(54) **LIFTING DEVICE**

(71) Applicant: AutoStore Technology AS, 5578 Nedre Vats (NO)
(72) Inventor: Engelsgjerd, Svein, Nedre Vats (NO)
(74) Representative: Kilburn & Strode LLP

(57) **Abstract**

The disclosure relates to a robotic container-handling vehicle for an automated storage and retrieval system, comprising: a first lifting device; a second lifting device supported by the first lifting device; and a gripping device for lifting a storage container, the gripping device coupled to the second lifting device.

## Description

### TECHNICAL FIELD

The disclosure relates to lifting devices. More particularly, it relates to lifting devices for robotic container-handling vehicles for an automatic storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The robotic container-handling vehicles are arranged to travel along the top of the grid, to retrieve, return or rearrange containers within the grid. The robotic container-handling vehicles can travel in X and Y directions along the rails, and a control system is provided to optimise route planning. The robotic container-handling vehicles are configured to transport a container between the grid and a port, which allows an operator such as a human operate to access the contents of a container. A control system is used to coordinate the activities of the robotic container-handling vehicles, for example instructions to retrieve or deliver a container from or to a port.

The robotic container-handling vehicles may lack stability, for example when accelerating or decelerating. Aspects and implementations of the invention of the present application are devised with the foregoing in mind.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows perspective view of a robotic container-handling vehicle equipped with two lifting devices;
Fig. 6 shows a side view of the robotic container-handling vehicle of Fig. 5, further equipped with a gripper;
Fig. 7 shows a perspective view of the robotic container-handling vehicle of Fig. 5 with the first lifting device in a raised position to accommodate a container; and
Fig. 8 shows a perspective view of the robotic container-handling vehicle of Fig. 6 with the first lifting device in a raised position and lifting a container.

### DETAILED DESCRIPTION

In overview, the disclosure relates to a robotic container-handling vehicle for an automated storage and retrieval system that comprises a first lifting device, such as a scissor lift. A second lifting device is supported by the first lifting device, and a gripping device for lifting a storage container is coupled to the second lifting device. By providing a first lifting device below a second lifting device, the first lifting device can be used to alter the retracted position of the gripping device, allowing the robot to accept multiple sizes of container. A further effect is that when no container is carried, the first lifting device may be lowered, thus lowering the centre of mass of the robot to increase its stability.

### Automated storage and retrieval system overview

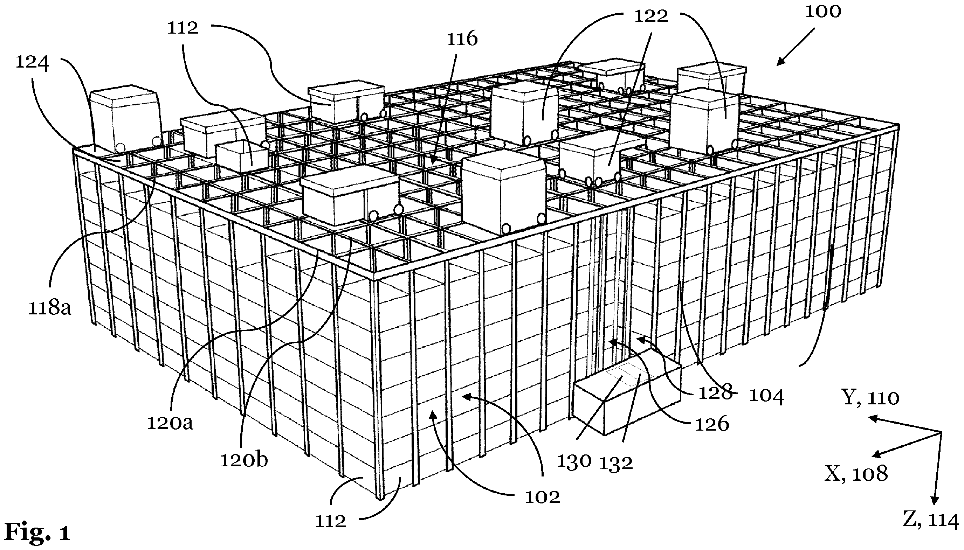

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

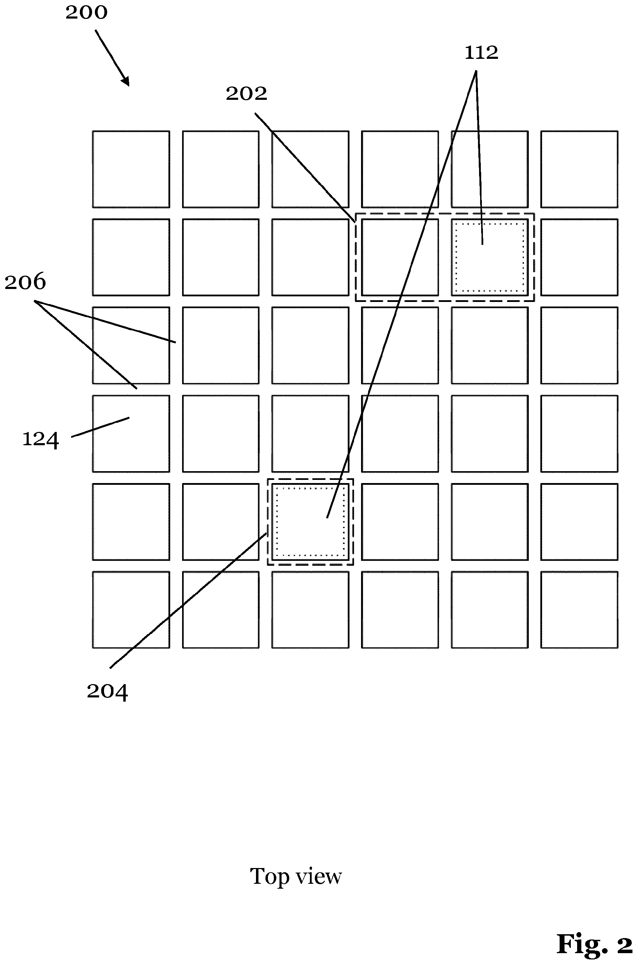

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

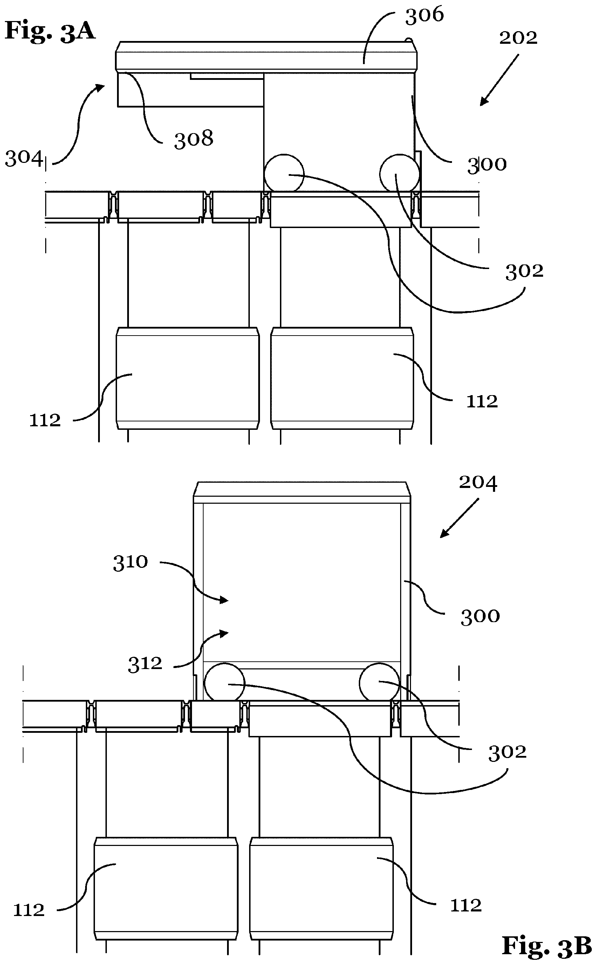

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

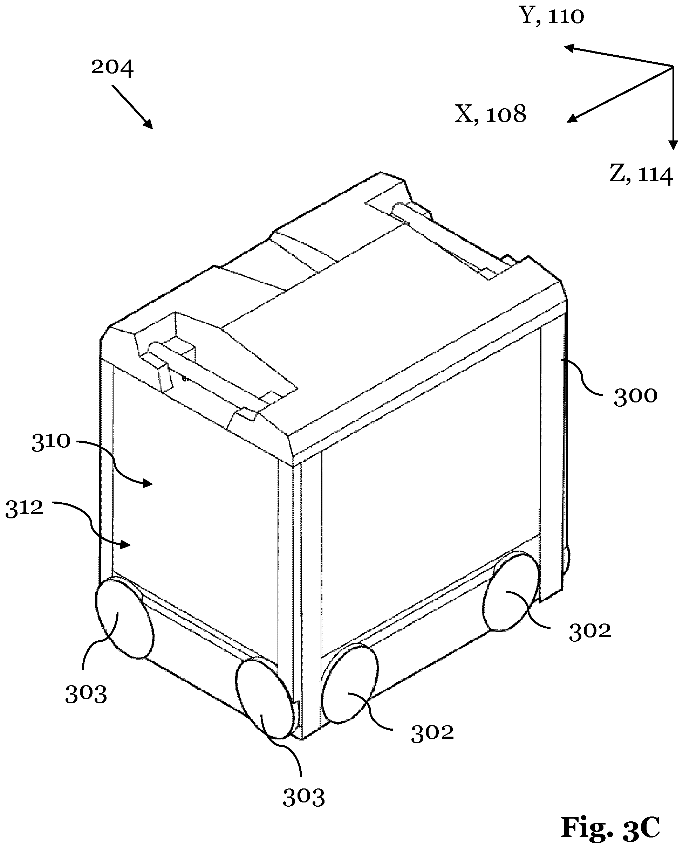

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

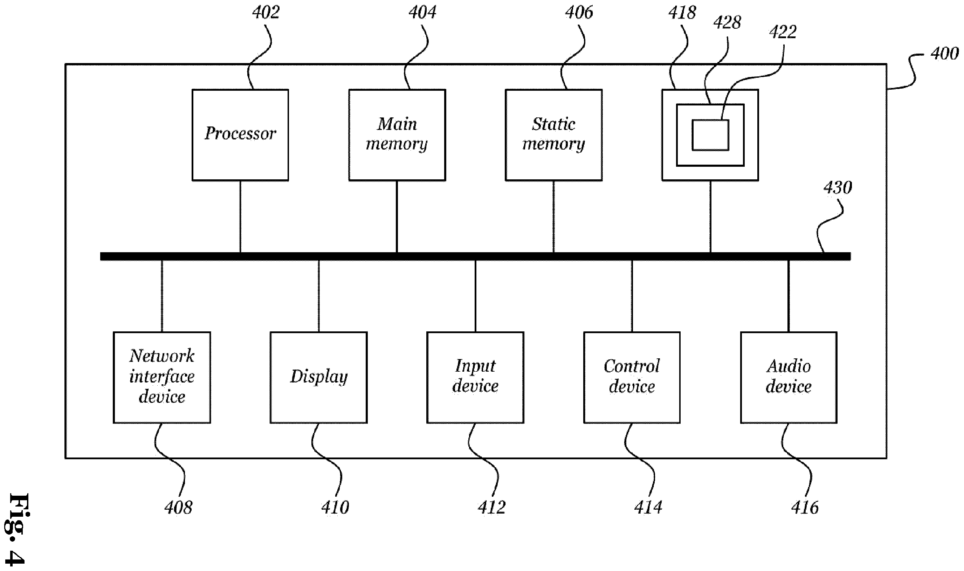

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

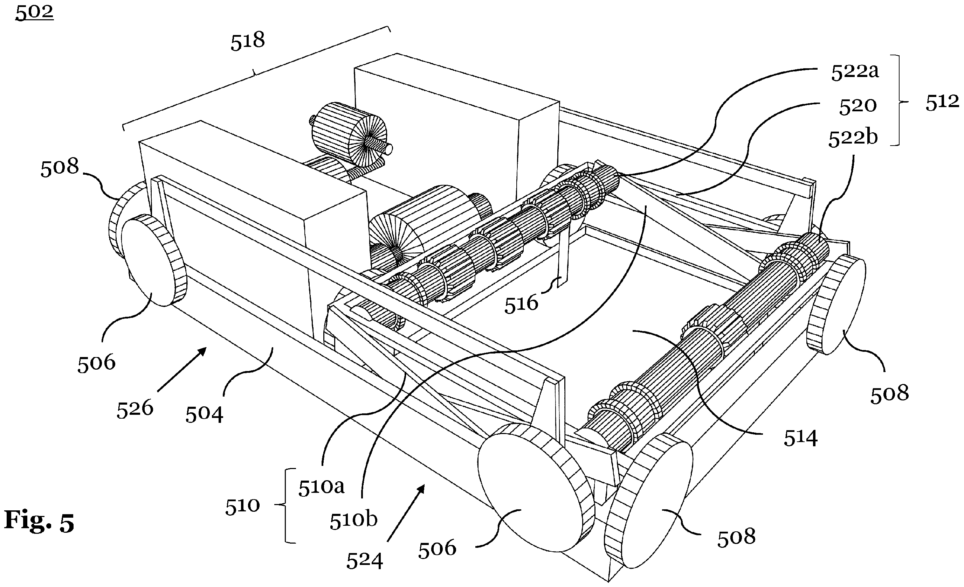

Shown in Fig. 5 is an example implementation of a robotic container-handling vehicle, or robot, 502 in perspective view. The robot 502 comprises a base 504, operational equipment 518, first set of wheels 506, second set of wheels 508, a first lifting device 510 and a second lifting device 512.

With reference to the example implementation of Fig. 5, the base 504 is shown comprising a first portion 524 with an opening 514 which is dimensioned to allow a gripper (not shown in Fig. 5) to pass through the opening 514. The opening 514 is so dimensioned by having a shape and size which allows a gripper (not shown in Fig. 5) to be lowered and raised though the opening 514 without being impeded by the base 504. Furthermore, the opening 514 has a shape and size which allows a container 112 to be lifted or lowered through the opening 514. The base 504 further comprises a second portion 526 supporting operational equipment 518. In the illustrated implementation, operational equipment 518 for the robot 502 includes drive, power and control systems.

Such operational equipment 518 is typically heavy and represents a high proportion of the mass of the robot 502. Advantageously, providing the operational equipment 518 on the second portion 526 of the base 504 lowers the centre of mass of the robot 502 such that the robot 502 is more stable compared to implementations where the operational equipment 518 is mounted above the lifting devices. Particularly, the robot 502 of Fig. 5 provides improvements in stability when under acceleration. Furthermore, when the robot 502 carries a container 112 the weight of the robot 502 and container 112 will be distributed between the first portion 524 and the second portion 526 of the base 504. The distribution of weight advantageously allows the centre of weight of the robot 502 to be towards the centre of the base 504, thus increasing stability of the robot 502 when carrying a container 112.

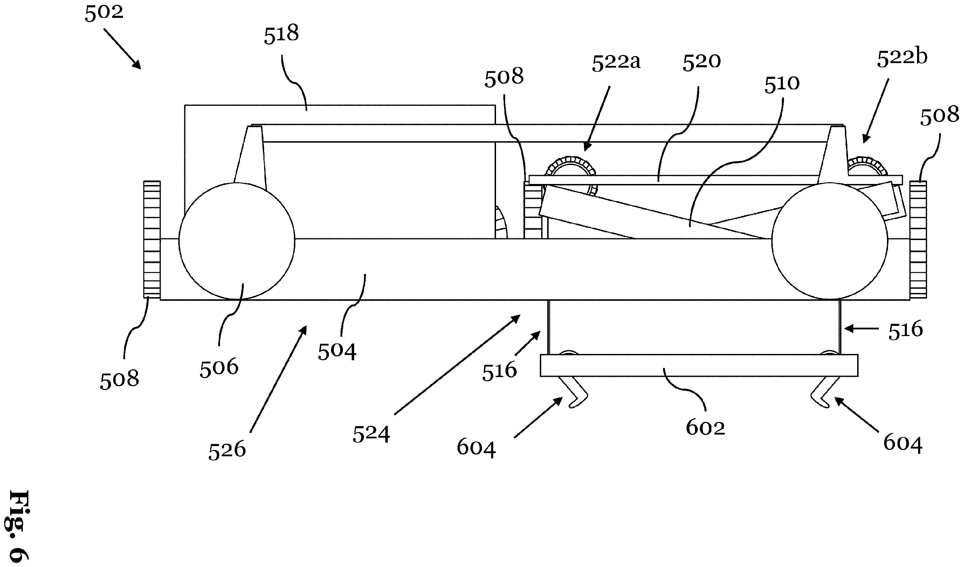

The wheels 506, 508 of the robot 504 are similar in operation to those described in the foregoing in reference to Fig. 2 and Fig. 3. In operation, the first set of wheels 506 and/or the second set of wheels 508, may be raised or lowered to permit selective engagement with the rail system 116 of the automated storage and retrieval system. First set of wheels 506 are arranged on opposite sides of the base 504 to support the robot 502 when travelling along one set of rails. Second set of wheels 508 are positioned on the other two sides of the base 504 in the example implementation of Fig. 5, and additionally between the first portion 524 of the base 504 and the second portion 526 of the base 504 (as shown more clearly in Fig. 6). When carrying a storage container 112 or bin via the first lifting device 510 and the second lifting device 512, the centre of mass of the robot 502 is likely to be close to the mid-point between the container 112 and the operational equipment 518. Advantageously, providing wheels at the mid-point of the base 504 between the container 112 and the operational equipment 518 improves stability of the robot 502.

With reference to Fig. 5, a 'front' of the robot 502 can be defined as the end of the robot comprising the lifting devices 510, 512, and the 'rear' can be defined as the end of the robot comprising the operational equipment 518. When the robot travels 'forward', the robot 502 is travelling with the front end in the direction of travel. A `left side' of the robot 502 can be defined as the side of the robot facing left relative to the forward direction of travel. A 'right side' of the robot can be defined as a side of the robot 502 facing right relative to the forward direction of travel.

In some example implementations, first set of wheels 506 are arranged on the left and right side of the robot 502 as defined above. In some example implementations, second set of wheels 508 are arranged at the rear end of the robot 502, at the front end of the robot 502, or both ends of the robot 502. In some example implementations, second set of wheels 508 further comprises wheels between the first portion 524 and the second portion 526 of the base 504. In some example implementations, the first set of wheels 506 and the second set of wheels 508 are positioned at the periphery of the base 504 at the sides as described above, such that some of the sets of wheels 506, 508 define the outer periphery of a footprint of the robot 502. In some example implementations, the first set of wheels 506 and/or the second set of wheels are configured to raise or lower the base 504 of the robot 502 relative to the rail system 116. In some example implementations, a subset of the first set of wheels 506 and/or the second set of wheels 508 are configured to be raised or lowered as described above. In some example implementations, a subset of the first set of wheels 506 and/or the second set of wheels are configured to raise or lower the base 504 of the robot 502 as described above.

The first set of wheels 506 and the second set of wheels 508 are configured to engage with rails 206 of an automated storage and retrieval system as described above in reference to Fig. 1. The first set of wheels 506 and the second set of wheels 508 are each configured to engage with rails 206. In some example embodiments rails 206 of an automated storage and retrieval system comprise parallel rails as described above. In such implementations, the robots 502 may be able to pass one another on adjacent parallel rails 206.

As shown in the example implementation of Fig. 5, the first lifting device 510 is provided beneath the second lifting device 512. Beneath, in this context, means between the base 504 and the second lifting device 512 such that when the robot 502 is oriented with the base 504 of the robot 502 lowermost, the second lifting device 512 is positioned above the first lifting device 510, which itself is positioned above the base 504.

An example implementation of the first lifting device 510 shown in Fig. 5 comprises two arms, 510a and 510b. The two arms are each connected to the base 504 either side of the opening 514 in the first portion 524 of the base 504 and connected to a frame member 520 of the second lifting device 512 above the opening 514.

In the example implementation of Fig. 5, the first arm 510a and the second arm 510b of the first lifting device 510 are shown as a two armed or `double' scissor lift arranged to be actuated by motors (not shown) on the base 504 to raise the frame member 520. Typically, such motors will be relatively heavy and so their arrangement on the base 504 lowers the centre of gravity of the robot 502, improving stability of the robot 502.

In some example implementations, the first lifting device 510 is a telescopic lifting means, rather than the depicted scissor lift. In some example implementations, motors (not shown) for operating the first lifting device 510 are included in the operational equipment 518. In some example implementations, motors (not shown) for operating the first lifting device 510 are provided on the first lifting device 510.

As shown in Fig. 5, the second lifting device 512 comprises lifting shafts 522a, 522b coupled to the frame member 520. In the example implementation of Fig. 5, the lifting shafts 522a, 522b are arranged to couple to the frame member 520 on the same side of the frame member 250 to the connection between the frame member 520 and the first lifting device 510. For example, as shown in Fig. 5, the first arm 510a and second arm 510b of the second lifting device 510 couple to the frame member 520 adjacent to mounting points of the first and second lifting shafts 522a, 522b. The coupling between the frame member 520 and the first lifting device 510, and the coupling between the frame member 520 and the lifting shafts 522a, 522b, are load-bearing points. This arrangement increases stability of the second lifting device 512 by arranging the load bearing points near one another on the frame member.

In some example implementations, the first lifting device 510 is a scissor lift with two arms 510a, 510b coupled to opposite sides of the second lifting device 512 and/or frame member 520. In some example implementations, the scissor lift is coupled to one side, or adjacent sides of the second lifting device 512 and/or frame member 520. In some example implementations, the first lifting device 510 is a scissor lift with a single lifting arm coupled to the frame member 520 and/or second lifting device 512 to lift the second lifting device 512. In some example implementations, support members are provided alongside the second lifting device and slidably connected to the frame member 520 to guide the first lifting device 510 when raising and lowering the second lifting device 512.

In the example implementation of Fig. 5, lifting bands 516 are wound around the lifting shafts 522a, 522b in a direction such that the lifting bands 516 spool off the lifting shafts 522a, 522b away from a periphery of the base 504, or towards a centre of mass of the robot 502 when the robot 502 is not carrying a container 112. The lifting bands 516 are shown depending downwardly from the lifting shafts 522a, 522b and through the opening 514 in first portion 524 of the base 504 of the robot 502. In some example implementations, the lifting bands 516 are wound around the lifting shafts 522a, 522b such that the lifting bands 516 descend from the lifting shafts 522a, 522b on a side of the lifting shafts 522a, 522b away from the front end of the robot 502.

The lifting bands 516 are arranged such that they depend from the lifting shafts 522a, 522b to support a gripper (not shown in Fig. 5) and can be spooled from the lifting shafts 522a, 522b to lower the gripper, and wound around the lifting shafts 522a, 522b to lift the gripper. Although not visible in the view of Fig. 5, in the example implementations of Fig. 5 - Fig. 8 the lifting bands 516 are arranged to support a gripper 602 from at least two separate positions of the second lifting device 512 by providing lifting bands 516 at two positions on each lifting shaft 522a, 522b, and two parallel lifting shafts 522a, 522b.

In some example implementations, motors for operating the second lifting device 512 are mounted on a movable platform (not shown) configured to be raised or lowered along with the second lifting device 512. Such motors are configured to rotate the lifting shafts 522a, 522b to wind or unwind the lifting belts 516. In some example implementations, the movable platform is connected to the frame member 520.

In some example implementations, the operational equipment 518 is modular and configured to be removed from the robot 502 without removal of other components. In some example implementations, the first lifting device 510 and the second lifting device 520 are modular and configured to be removed from the robot 502 without removal of other components. In some example implementations, the operational equipment 518 comprises motors and batteries which are configured to be replaced in a modular fashion. Modular componentry allows rapid and cheap configuration of a robot 502 to a particular usage requirement. Such requirements may be a limitation on weight of the robot 502, power of the robot 502, maximum weight liftable by the robot 502, speed or acceleration of the robot 502 or similar constraints.

With reference to Fig. 6, the robot 502 of Fig. 5 may comprise a gripper 602 configured to engage with and lift a storage container 112 or bin. As shown in the example implementation of Fig. 6, the gripper 602 is connected to lifting bands 516 such that it can be lowered through the base of the robot 502. As shown in Fig. 6, the gripper is supported by lifting bands 516 depending from each of the lifting shafts 522a, 522b. Gripper 602 is shown comprising latches 604 for engaging a storage container or bin 112. The latches 604 are configured to be reversibly engageable with storage containers 112. The gripper 602 is arranged to be lowered from a retracted position, adjacent to the second lifting device 512, to a position to engage with a container 112, below the base 504 of the robot 502. The gripper 602 is arranged to pass through the base 504 of the robot 502 through the opening 514 to access containers 112 in a storage grid as described above with reference to Fig. 1.

In some example implementations, the gripper 602 may be attached to a lifting shaft 522a, 522b by a single lifting band 516. In some example implementations, one lifting shaft 522a is provided and connected to the gripper by a single lifting band 516.

In some example implementations, the gripper 602 comprises alternative gripping means to the latches 604, for example movable protrusions. It will be appreciated that a variety of alternative gripping means may be fitted to the gripper 602 in alternative implementations of the robot 502.

In operation, the robot 502 is configured to navigate a rail system 116 using first set of wheels 506 to travel in a first direction and second set of wheels 508 to travel in a second direction, as described above with reference to Fig. 2 and Fig. 3. The first set of wheels 506 and/or the second set of wheels 508 are configured to be raised and lowered to allow the robot 502 to travel in each of the two directions.

When the robot 502 is above a container 112 to be lifted, the second lifting device 512 is configured to unspool or unwind the lifting bands 516 from the lifting shafts 522a, 522b, to lower the gripper 602 through the opening 514 in the base 504. The gripper 602 is configured to be further lowered to a container 112, whereupon the gripper 602 is configured to engage with the container 112 and the second lifting device 512 lifts the gripper 602 and container 112 by retracting the lifting bands 516.

As shown in Fig. 6, and discussed above in reference to Fig. 5, the lifting bands 516 depend from a side of the lifting shafts 522a, 522b such that they spool away from the nearest edge of the base 504. In the event that the gripper 602 becomes stuck, or otherwise the lifting shafts 522a, 522b continue to spool off the lifting bands 516 whilst the gripper 602 does not descend, this may introduce slack into the lifting bands 516. In such a scenario, the lifting bands may 'spool out' from the lifting shafts 522a, 522b. For example, due to a rigidity in the lifting bands 516 they may not fold or collapse onto the gripper 602 but instead bend and thereby protrude from the second lifting device. The direction of the protrusion of the lifting bands 516 from the second lifting device 512 and potentially the base 504 is strongly influenced by the direction the lifting bands 516 are wound about the lifting shafts 522a, 522b. Arranging the lifting bands 516 to spool from the lifting shafts 522a, 522b towards a centre of mass of the robot 502 directs any such 'spooling out' to the centre of the robot 502 and not towards a periphery or edge of the base 504.

Advantageously, the lifting bands 516 are restricted from protruding from the base 504 in this arrangement and therefore do not impede the progress of other robots 502 of the automated storage and retrieval system.

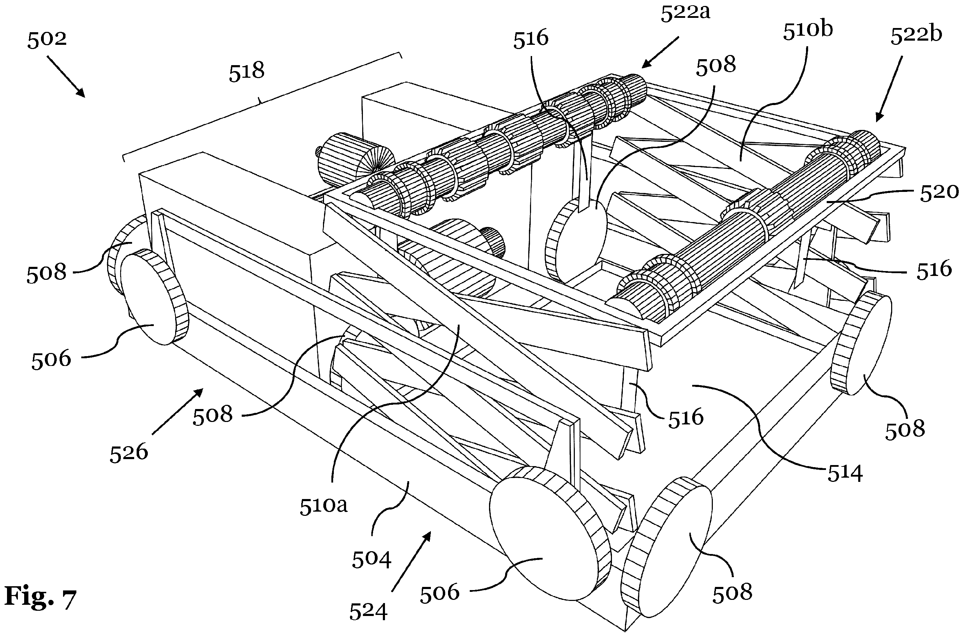

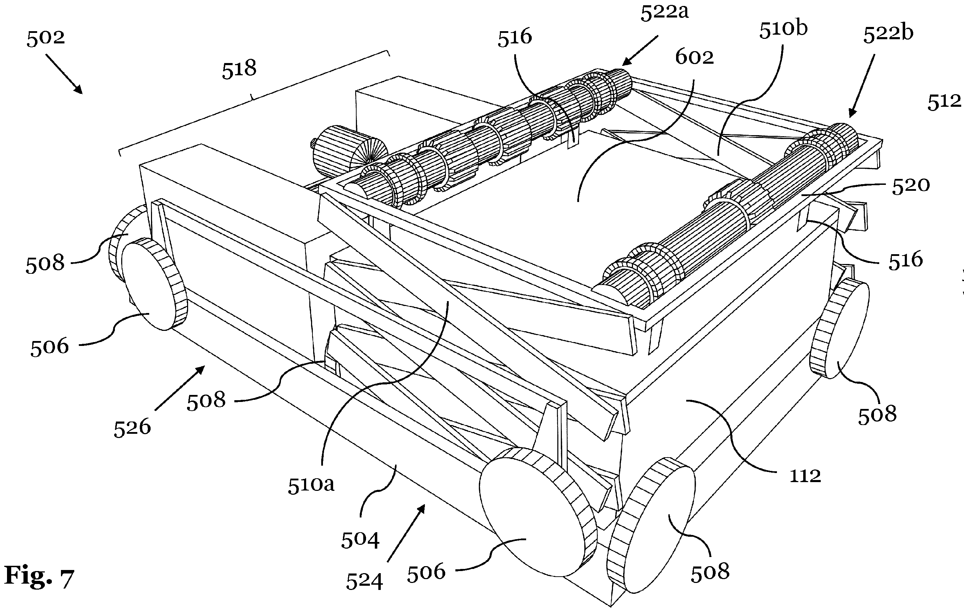

Fig 7. shows the robot 502 of Fig. 5 with first lifting device 510 in a raised position. As shown, in a raised position the first lifting device 510 lifts and supports the second lifting device 512 vertically above the opening 514 in the first portion 524 of the base 504. The alignment of the second lifting device 512 with the opening 514 is maintained by the first lifting device 510 to allow the gripper 602 (not shown in Fig. 7) to be lowered through the base 514 when the first lifting device 510 is in a raised or a lowered position.

In some example implementations, the first lifting device 510 is configured to only move the second lifting device 512 in a vertical direction, and to maintain alignment of the second lifting device 512 with the opening 514.

In some example implementations, a container 112 may have a height that is greater than the distance between the second lifting device 512 and the base 504 when the first lifting device 510 is in a lowered position. In such implementations, to accommodate the container 112 within the base 504 of the robot 502, the first lifting device 510 is configured to lift the second lifting device 512 to a raised position, as shown in Fig. 8.

Fig. 8 shows the robot 502 carrying a container 112, where the gripper 602 and container 112 have been lifted free of the grid (not shown) such that the bottom of the container 112 is above the grid. This allows the robot 502 to navigate the automated storage and retrieval system. In some example implementations, the first lifting device 510 raises the second lifting device 512 to a minimum required height to raise the bottom of the container 112 above the grid whilst the second lifting device 512 is in a retracted position. Advantageously, raising the second lifting device 512 by a minimum required amount keeps the centre of mass of the robot 502 when carrying a container 112 low and therefore improves stability of the robot 502, and particularly improves stability of the robot 502 under acceleration.

### Penultimate comments

In an implementation, a robotic container-handling vehicle for an automated storage and retrieval system comprises a first lifting device, a second lifting device supported by the first lifting device, and a gripping device for lifting a storage container, the gripping device coupled to the second lifting device.

By providing a first lifting device below a second lifting device, the first lifting device can alter the retracted position of the gripping device, allowing the robot to accept multiple sizes of container.

In some example implementations, the first lifting device is provided beneath the second lifting device.

The lower position of the first lifting device allows the nominal height of the robot to be reduced, and also allows relatively heavy components to be located at lower portions of the robot, lowering the centre of mass and therefore increasing stability, for example, under acceleration.

In some example implementations, the robotic container-handling vehicle further comprises a base, wherein a first portion of the base extends below the first lifting device to support the first lifting device.

The base supports the first lifting device providing stability when the first lifting device is carrying a load such as a container or a multi-container frame.

In some example implementations, the base comprises a second portion adjacent to the first portion.

The second portion is able to support batteries and electronics such as motors close to the wheels, lowering the centre of mass and improving stability of the robot, for example, when accelerating.

In some example implementations, the first portion of the base comprises an opening dimensioned to allow the gripping device to pass through the opening.

When lifting a load, the moment of inertia on the base is reduced by lifting a load such as a container through the opening of the base, increasing stability of the robot.

In some example implementations, the second lifting device comprises: a frame member; a first lifting shaft coupled to the frame member; and a first set of lifting bands, wherein the lifting bands are arranged to be wound around the lifting shaft and coupled to the gripping device.

A second lifting device using a lifting shaft and lifting bands provides a lifting device with reduced height and volume, which in turn increases the available height for carrying a container within a maximum height of the robot which may be required.

In some example implementations, the second lifting device further comprises: a second lifting shaft arranged parallel to the first lifting shaft and coupled to the frame member, and a second set of lifting bands arranged to be wound around the second lifting shaft and coupled to the gripping device.

The stability of the gripping device is improved by providing two lifting shafts with two sets of lifting bands to connect the gripping device to the second lifting device.

In some example implementations the second lifting device is configured such that the lifting bands spool from a respective lifting shaft in a direction away from a periphery of the robot container-handling vehicle.

In the event of reduced tension on a lifting band, the band may 'spool out' from the lifting shaft. By winding the lifting bands such that they spool from the lifting shafts away from the periphery or sides of the robot, the lifting bands are prevented from spooling outside the base and into the path of other robots.

In some example implementations the first lifting device comprises a scissor lift.

A scissor lift occupies very little volume and so allows the footprint of the robot to be reduced.

In some example implementations the scissor lift comprises two lifting arms coupled to the second lifting device.

Two scissor lift arms arranged at either end of the second lifting device improves mechanical stability of the first lifting device and improves weight distribution on the base.

In some example implementations, the base comprises wheels for traversing an automated storage and retrieval system.

The robot is thereby able to traverse the storage and retrieval system.

In some example implementations, the wheels comprise a first set of parallel wheels and a second set of parallel wheels orthogonally positioned relative to the first set of parallel wheels.

The robot is able to traverse in both X and Y directions without requiring the robot to rotate.

In some example implementations, the second set of wheels comprises a pair of wheels arranged between the first portion and the second portion of the base.

The interface between the first and second portion of the base is close to the centre of mass of the robot when it is carrying a load, and therefore providing wheels at this location improves stability of the robot.

In some example implementations, the second set of wheels further comprises wheels arranged at the periphery of the base.

The robot is further supported by wheels at the front and back resting on rails when the second set of wheels is engaged, further allowing robots to pass one another on a rail system.

In some example implementations the first set of wheels comprises wheels arranged at the periphery of the base.

The robot is further supported by wheels at the sides resting on rails when the first set of wheels is engaged, further allowing robots to pass one another on a rail system.

In some example implementations, a footprint of the base of the container-handling vehicle has a footprint that corresponds to the footprint of at least two storage columns of an automated storage and retrieval system.

The robot footprint therefore occupies two grid cells and allows other robots to pass the robot when it is lifting or lowering a container to or from the grid.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A robotic container-handling vehicle for an automated storage and retrieval system, comprising:
a first lifting device;
a second lifting device supported by the first lifting device; and
a gripping device for lifting a storage container, the gripping device coupled to the second lifting device.

2. A robotic container-handling vehicle according to claim 1,
wherein the first lifting device is provided beneath the second lifting device.

3. A robotic container-handling vehicle according to claim 1 or claim 2,
further comprising a base, wherein a first portion of the base extends below the first lifting device to support the first lifting device.

4. A robotic container-handling device according to claim 3,
wherein the base comprises a second portion adjacent to the first portion.

5. A robotic container-handling vehicle according to claim 3 or claim 4,
wherein the first portion comprises an opening dimensioned to allow the gripping device to pass through the opening.

6. A robotic container-handling vehicle according to any preceding claim,
wherein the second lifting device comprises:
a frame member;
a first lifting shaft coupled to the frame member; and,
a first set of lifting bands, wherein the lifting bands are arranged to be wound around the lifting shaft and coupled to the gripping device.

7. A robotic container-handling vehicle according to claim 6,
wherein the second lifting device further comprises:
a second lifting shaft arranged parallel to the first lifting shaft and coupled to the frame member, and
a second set of lifting bands arranged to be wound around the second lifting shaft and coupled to the gripping device.

8. A robotic container-handling vehicle according to claim 6 or claim 7,
wherein the second lifting device is configured such that the lifting bands spool from a respective lifting shaft in a direction away from a periphery of the robot container-handling vehicle.

9. A robotic container-handling vehicle according to any preceding claim,
wherein the first lifting device comprises a scissor lift.

10. A robotic container-handling vehicle according to claim 9,
wherein the scissor lift comprises two lifting arms coupled to the second lifting device.

11. A robotic container-handling vehicle according to any preceding claim,
wherein the base comprises wheels for traversing an automated storage and retrieval system.

12. A robotic container-handling vehicle according to claim 11,
wherein the wheels comprise a first set of parallel wheels and a second set of parallel wheels orthogonally positioned relative to the first set of parallel wheels.

13. A robotic container-handling vehicle according to claim 12,
wherein the second set of wheels comprises a pair of wheels arranged between the first portion and the second portion of the base.

14. A robotic container-handling vehicle according to claim 12,
wherein the second set of wheels further comprises wheels arranged at the periphery of the base, and wherein the first set of wheels comprises wheels arranged at the periphery of the base.

15. A robotic container-handling vehicle of any of claim 3 to claim 14,
wherein a footprint of the base of the container-handling vehicle has a footprint that corresponds to the footprint of at least two storage columns of an automated storage and retrieval system.
